# EUROPÄISCHE PATENTSCHRIFT

(11) **EP 0 358 125 B1**
(45) Veröffentlichungstag und Bekanntmachung des Hinweises auf die Patenterteilung: **31.03.1993**
(21) Anmeldenummer: 89116177.0
(22) Anmeldetag: 01.09.1989
(51) Int. Cl.: B01D 53/36, B01J 23/56

(54) **Abgaskatalysator mit verminderter Neigung zur Speicherung von Schwefeloxiden und Schwefelwasserstoffemission**
Exhaust gas catalyst having a reduced tendency of accumulating sulphur dioxide and hydrogen sulphide emissions
Catalyseur pour gaz d'échappement ayant une tendance réduite au stockage des émissions de l'anhydride sulfureux et de l'hydrogène sulfuré

(30) Priorität: 07.09.1988 DE 3830318
(43) Veröffentlichungstag der Anmeldung: 14.03.1990
(73) Patentinhaber: Degussa Aktiengesellschaft, 60311 Frankfurt (DE)
(72) Erfinder: Engler, Bernd, Dr., D-6450 Hanau 9 (DE); Koberstein, Edgar, Dr., D-8755 Alzenau (DE); Lox, Egbert, Dr., D-6450 Hanau 9 (DE)

(56) Entgegenhaltungen:
- EP-A- 0 170 588
- DE-A- 2 907 106
- US-A- 4 120 821
- US-A- 4 316 822

## Beschreibung

Die Erfindung betrifft einen Katalysator für die Reinigung der Abgase von Brennkraftmaschinen durch Oxidation und/oder Reduktion, das Herstellungsverfahren für den Katalysator und seine Verwendung. Die Katalysatoren können die Platingruppenmetalle Platin, Palladium und Rhodium einzeln oder in Kombination enthalten. Sie können, je nach Zusammensetzung als Reduktionskatalysator eines Doppelbettreaktors (hier wird das Abgas zuerst einem Reduktionskatalysator und dann nach Luftbeimischung einem Oxidationskatalysator zugeführt) oder als multifunktioneller Katalysator für die gleichzeitige Konversion der oxidierbaren und der reduzierbaren Bestandteile des Abgases, verwendet werden.

Motorabgaskatalysatoren, insbesondere solche mit hohen Ceroxidgehalten, vermögen unter oxidierenden Abgasbedingungen Schwefeloxide zu binden. Beim Wechsel auf reduzierende Abgase während des Fahrbetriebs können die so gespeicherten Schwefeloxidmengen z. T. als Schwefelwasserstoff wieder freigesetzt werden.

Da Motorabgase aufgrund einer Verwendung von schwefelhaltigen Treibstoffen Schwefeldioxid enthalten können und der Abgaskatalysator je nach Fahrweise sowohl oxidierende als auch reduzierende Bedingungen sieht, kann bei Verwendung herkömmlicher Autoabgaskatalysatoren Schwefelwasserstoff emittiert werden. Die H₂S-Geruchsschwelle kann dabei kurzzeitig deutlich überschritten werden.

Es ist zwar seit einiger Zeit bekannt, daß nickelhaltige Katalysatoren nur sehr geringe Schwefelwasserstoffemissionen zeigen, doch ist der Gebrauch von Nickel als Komponente bei Motorabgaskatalysatoren wegen seiner kancerogenen Wirkung umstritten. Er sollte daher grundsätzlich vermieden werden.

Aus umwelthygienischen Gründen besteht daher ein Bedarf an nickelfreien Motorabgaskatalysatoren mit verminderter Neigung zur Schwefelwasserstoffemission.

Die Erfindung geht im wesentlichen von der allgemeinen Lehre der DE-C-29 07 106 zur Formulierung von Abgasreinigungskatalysatoren aus, erweitert diese insbesondere aber in bezug auf die in Frage kommenden Elemente der Oxidschicht und deren Kombinationen durch eine neue Komponente, mit der es gelingt, obengenannten Mangel weitgehend zu beseitigen.

Während die genannte Druckschrift einen Abgaskatalysator mit einer auf Aluminiumoxid der Übergangsreihe aufgebrachten aktiven Phase aus 0,03 bis 3 Gew.-% Platin und Rhodium und gegebenenfalls einem aus Aluminium, Titan, Chrom, Mangan, Kobalt und/oder Nickel bestehenden Unedelmetall, mit einem Gewichtsverhältnis zwischen Platin und Rhodium von 2 : 1 bis 20 : 1 und gegebenenfalls einem Atomverhältnis zwischen Platingruppenmetallen und den Unedelmetallen von 1 : 6 bis 2 : 1 , erhalten durch Imprägnieren des gegebenenfalls mit Erdalkalimetall gitterstabilisierten Trägermaterials mit einer wäßrigen Lösung eines Salzes des Platins und Rhodiums und gegebenenfalls der Unedelmetalle, Trocknen und Behandeln in einem Wasserstoff enthaltenden Gasstroms bei Temperaturen von 250 bis 650°C beschreibt, bei dem die aktive Phase als weiteres Unedelmetall Zinn enthalten kann, der Katalysator weiterhin 5 bis 10 Gew.-% an einem Gemisch von CeO₂ und ZrO₂ in Gewichtsverhältnissen von 20 : 80 bis 80 : 20 und 1 bis 10 Gew.-% an Fe₂O₃ enthält, wobei das gegebenenfalls gitterstabilisierte und gegebenenfalls bei 900° C getemperte Trägermaterial vor dem Imprägnieren mit der Lösung des Platin- und Rhodiumsalzes sowie gegebenenfalls der Unedelmetalle mit einer wäßrigen Lösung von Cer-, Zirkonium- und Eisensalz imprägniert oder mit deren Oxiden vermischt und anschließend 30 bis 180 Min. an Luft bei 500 bis 700° C getempert wird, betrifft die Erfindung einen Katalysator für die Reinigung der Abgase von Brennkraftmaschinen mit herabgesetzter Neigung zur Speicherung von Schwefeloxiden und der Emission von Schwefelwasserstoff mit einem 2 bis 70 Gew.-% CeO₂ und 0 bis 20 Gew.-% ZrO₂ sowie gegebenenfalls Eisenoxid, Erdalkalioxide und/oder Seltene Erdmetalloxide enthaltendem Aluminiumoxid der Übergangsreihe als Träger und einer auf den Träger aufgebrachten aktiven Phase aus 0,01 bis 3 Gew.-% Platin, Palladium und/oder Rhodium mit einem Gewichtsverhältnis zwischen Platin und/oder Palladium und dem gegebenenfalls anwesenden Rhodium von 2 : 1 bis 30 : 1 , wobei der Katalysator gegebenenfalls in Form eines Überzugs auf einem wabenförmigen inerten Träger aus Keramik oder Metall oder auf einem Schaumkeramikträger in einer Menge von 5 bis 30 Gew.-%, bezogen auf das Gewicht des Trägers, vorliegt.

Der Katalysator ist dadurch gekennzeichnet, daß er 0,2 bis 25 Gew.-% B₂O₃, bezogen auf Al₂O₃, enthält.

Die Wirkung des erfindungsgemäßen Katalysators kann dadurch differenziert werden, daß der Träger neben dem ZrO₂ noch 0,5 bis 20 Gew.-% Fe₂O₃, BaO, CaO, La₂O₃ und/oder andere Seltene Erdmetalloxide enthält.

Der Katalysator kann, wie schon erwähnt, in Form eines Überzugs auf einem wabenförmigen Träger aus Keramik oder Metall oder als Schüttgutkatalysator oder als wabenförmiges monolithisches Vollextrudat (bei dem der wabenförmige Monolith durch und durch aus der Katalysatorkomposition besteht) oder als Schaumkeramik vorliegen.

Ein anderer Gegenstand der Erfindung ist ein Verfahren zur Herstellung des beschriebenen Katalysators. Es ist gekennzeichnet durch Imprägnieren des gegebenenfalls gitterstabilisierten Aluminiumoxids mit einer wäßrigen Lösung von Cersalz und gegebenenfalls Zirkonsalz oder durch Vermischen des gegebenenfalls gitterstabilisierten Aluminiumoxids mit einer wäßrigen Suspension von deren Oxiden, Hydroxiden oder Carbonaten und nachfolgendes Tempern an der Luft bei 500 bis 900°C sowie anschließendes Imprägnieren des Trägers mit einer wäßrigen Lösung des Platin-, Palladium- und/oder Rhodiumsalzes, Trocknen und Wärmebehandeln, gegebenenfalls in einem Wasserstoff enthaltenden Gasstrom, bei Temperaturen von 250 bis 650° C, wobei die Einbringung des B₂O₃-Gehalts durch Imprägnieren des Al₂O₃ oder des CeO₂ und gegebenenfalls ZrO₂ enthaltenden Al₂O₃ vor, zusammen mit oder nach dem Aufbringen der Edelmetallkomponente mit einer gelösten oder dispergierten borhaltigen Verbindung, Trocknen und thermisches Aktivieren erhältlich ist, wobei das thermische Aktivieren im Falle des Imprägnierens zusammen mit oder nach dem Aufbringen der Edelmetallkomponente bei Temperaturen von 150 bis 650° C, gegebenenfalls unter hydrothermalen Bedingungen, und im Falle des Imprägnierens vor dem Aufbringen der Edelmetallkomponente bei Temperaturen vor 150 bis 900° C erfolgt.

Ein weiterer Gegenstand der Erfindung besteht in der Verwendung des Katalysators zur Reinigung der Abgase von Verbrennungskraftmaschinen, d. h. als Oxidations-und/oder Reduktionskatalysator zur Reinigung der Abgase von Verbrennungskraftmaschinen unter Verminderung der Speicherung von Schwefeloxiden und der Emission von Schwefelwasserstoff.

Die Dotierung der Trägerkomponente mit CeO₂ und z. B. ZrO₂ sowie die Aufbringung der aktiven Edelmetalle erfolgt im wesentlichen nach den in der DE-C-29 07 106 beschriebenen Maßnahmen. Die Dotierung mit B₂O₃ kann auf einfache Weise mittels Borsäure erfolgen, welche entweder als wäßrige Lösung oder als Dispersion in einer Borsäure nicht lösenden Flüssigkeit in das mit CeO₂ und/oder den anderen Dotierungsmaterialien beladene oder davon noch freie Trägermaterial einimprägniert bzw. eingebracht wird oder der Dotierungslösung, z. B. auch als Feststoff, zugesetzt wird. Auch eine gesonderte oder gleichzeitige Applikation in Verbindung mit der Edelmetalleinbringung ist auf entsprechende Weise möglich. Im letztgenannten Fall kann eine Aktivierung unter hydrothermalen Bedingungen, z. B. in einem Wasserdampfstrom oder einem Wasserdampf enthaltenden Stickstoffstrom, nützlich sein. Die Dotierung kann aber auch erfolgen durch Zugabe von B₂O₃-Pulver zum Trägermaterial oder aber durch Anwendung einer Suspension einer in Wasser unlöslichen Borverbindung, z. B. von Borphosphat (BPO₄) , wobei die Einbringung vor oder zusammen mit den anderen Dotierungsmaterialien stattfinden kann.

Die Temperatur der auch hier angewandten Aktivierung wird dabei niedriger gehalten, d. h. hier soll für die Aktivierung der Edelmetallkomponente die vorgesehene obere Ecktemperatur (650° C) nicht überschritten werden.

Das Trägermaterial, z. B. γ-Aluminiumoxid und/oder eine andere Kristallphase aus dem Übergangsfeld zu α-Aluminiumoxid, kann durch Imprägnieren mit Lösungen von Salzen der Erdalkalimetalle, von Zirkon und von Elementen der Reihe der Seltenen Erden sowie siliciumhaltiger Verbindungen und anschließendes etwa 4 bis 12-stündiges Erhitzen gitterstabilisiert sein. Anstelle der Imprägnierung kann eine Kopräzipitation von Salzen des Aluminiums und der Stabilisatorvorstufe erfolgt sein.

Je nach der Wahl der Katalysatorkomposition kann ein nur reduzierendes, ein nacheinander oxidierendes und reduzierendes oder ein gleichzeitig oxidierendes und reduzierendes Abgasreinigungssystem bestückt werden. Reduktionskatalysatoren enthalten als aktive Phase vorzugsweise Platin und Rhodium, Doppelbettsysteme einen Platin und Rhodium enthaltenden ersten Katalysator und einen Platin, Platin/Palladium, Platin/Rhodium oder Platin/Palladium/Rhodium enthaltenden zweiten Katalysator; multifunktionelle Katalysatoren enthalten vorzugsweise Platin/Rhodium oder Platin/Palladium/Rhodium.

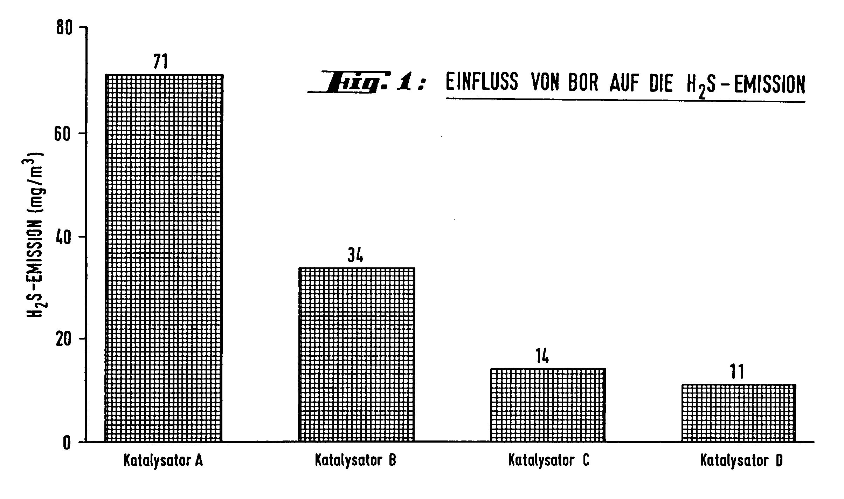

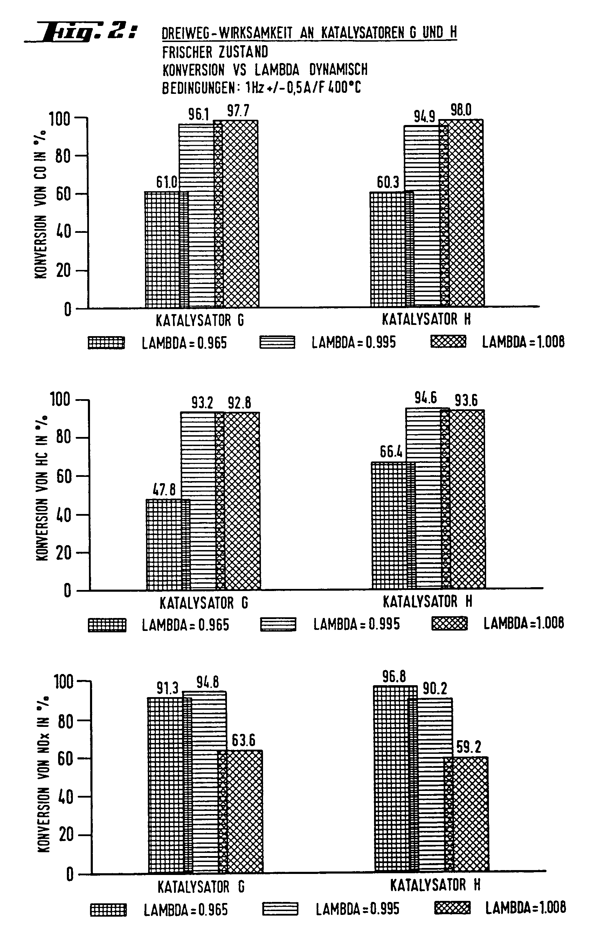

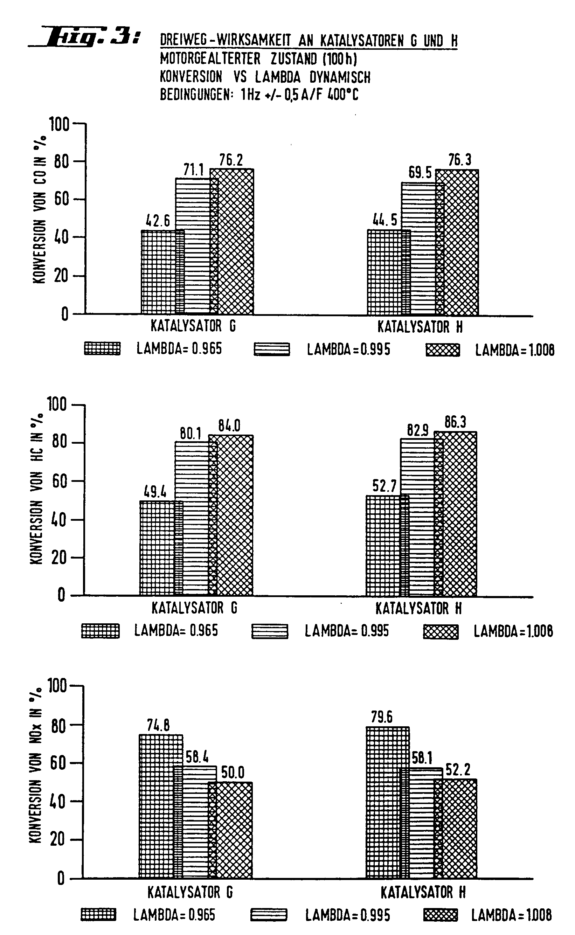

Die Erfindung wird nachfolgend in Verbindung mit Ausführungsbeispielen und der Zeichnung weiter erläutert.

### Beispiel 1

4 Dreiwegkatalysatoren des Pellet-Typs wurden auf dieselbe Weise hergestellt und mit demselben Gehalt an Edelmetall, sauerstoffspeichernder Komponente und Trägerstabilisator versehen. Als Trägermaterial wurde γ-Aluminiumoxid verwendet, welches mit 0,6 Gew.% Zirkondioxid und mit 7,6 Gew.% CeO₂, bezogen auf die Aluminiumoxidmenge versehen wurde. Die Edelmetallbeladung betrug 0,029 Gew.% Pt, 0,087 Gew.% Pd und 0,007 Gew.% Rh, jeweils bezogen auf die Aluminiumoxidmenge. (Gewichtsverhältnis Pt : Pd : Rh = 4 : 12 : 1).

Die Herstellung der Katalysatoren erfolgte in zwei wesentlichen Stufen: In der ersten Stufe wurden γ-Al₂O₃-Pellets mit einem mittleren Durchmesser von 3 mm und einer spezifischen Oberfläche von 120 m²/g mit der erforderlichen Menge Cer- und Zirkonnitrat imprägniert, bei 120° C getrocknet und bei 600° C an Luft calciniert. In der zweiten Stufe wurden die Pellets mit den Edelmetallen imprägniert, bei 120° C getrocknet und wiederum bei 600° C calciniert. Es ergab sich Katalysator A.

Der zweite, als Katalysator B bezeichnete Katalysator wurde auf dieselbe Weise, jedoch mit der Ausnahme hergestellt, daß Borsäure (H₃BO₃) der Lösung für die Ausgangsverbindungen der beiden Promotoren Cer und Zirkon in einer Menge zugesetzt wurde, daß der fertige Katalysator einen Borgehalt von 1,3 Gew.%, gerechnet als B₂O₃, aufwies.

Der dritte, als Katalysator C bezeichnete Katalysator wurde ebenso hergestellt wie Katalysator B, jedoch mit der Ausnahme, daß der fertige Katalysator 3,1 Gew.% B₂O₃ enthielt.

Der vierte, als Katalysator D bezeichnete Katalysator, wurde ebenso hergestellt wie Katalysator B, jedoch mit der Ausnahme, daß der Borgehalt des fertigen Katalysators 6,3 Gew.%, gerechnet als B₂O₃, betrug.

### Beispiel 2

Die Schwefelwasserstoffemissionen der gemäß Beispiel 1 hergestellten 4 Katalysatoren A, B, C und D wurden in einem zweistufigen Verfahren in einem Synthesegasreaktor bestimmt. Die erste Stufe wurde bei den folgenden Prüfbedingungen ausgeführt:
- Temperatur:: 450° C
- Raumgeschwindigkeit:: 66 000 l Abgasvolumen/h/l Katalysatorvolumen
- Dauer:: 1 Stunde
- Gaszusammensetzung:: mager : λ = 1 .004

| | | |
|---|---|---|
| CO : 1.0 Vol.% | SO₂ : 20 ppm | O₂ : 1.05 Vol.% |
| C₃H₆ : 0.033 Vol.% | CO₂ : 14 Vol.% | N₂ : Rest |
| C₃H₈ : 0.017 Vol.% | H₂O : 10 Vol.% | |
| NO : 0.10 Vol.% | H₂ : 0.33 Vol.% | |

Am Ende der ersten Prüfstufe wurde die Gaszusammensetzung bei gleichbleibender Temperatur und Raumgeschwindigkeit auf "fett" umgestellt (λ=0.92); während der ersten zwei Minuten nach dem Umschalten wurden die Abgase gesammelt und der durchschnittliche Schwefelwasserstoffgehalt bestimmt.

Die Gaszusammensetzung in der zweiten Stufe betrug:

| | | |
|---|---|---|
| CO : 2.1 Vol.% | SO₂ : 20 Vol.ppm | O₂ : 0.25 Vol.% |
| C₃H₆ : 0.033 Vol.% | CO₂ : 14 Vol.% | N₂ : Rest |
| C₃H₈ : 0.017 Vol. % | H₂O : 10 Vol. % | |
| NO : 0.10 Vol.% | H₂ : 0.71 Vol.% | |

Die Ergebnisse dieser Schwefelwasserstoffbestimmung für die Katalysatoren A, B, C und D werden in Figur I dargestellt. Wie darauf klar ersichtlich ist, verringert der Borzusatz die H₂S-Emission beträchtlich.

### Beispiel 3

Es wurden zwei weitere Katalysatoren, die mit Katalysator E und Katalysator F bezeichnet sind, hergestellt, und zwar unter Verwendung eines keramischen Wabenkörpers aus Cordierit.

Die Herstellung erfolgte in zwei Stufen: In der ersten Stufe wurde γ-Al₂O₃ in Pulverform mit 3,0 Gew.% ZrO₂ und 60,0 Gew.% Cerdioxid (durch Imprägnieren mit Zirkon- und Ceracetatlösung) beladen; das so dotierte Al₂O₃ wurde in die Form einer 30 Gew.% Feststoff enthaltenden wäßrigen Dispersion gebracht und mit dieser die keramische Wabe beschichtet. Die beschichtete Wabe wurde dann auf an sich bekannte Weise durch Imprägnieren mit Salzlösungen von Platin (Platinnitrat), Rhodium (Rhodiumchlorid) und Palladium (Palladiumnitrat) beladen, so daß eine Edelmetallbeladung aus 0,436 Gew.% Platin, 0,635 Gew.% Palladium und 0,194 Gew.% Rhodium, jeweils bezogen auf die Aluminiumoxidmenge vorlag. (Katalysator E).

Katalysator F wurde auf dieselbe Weise wie Katalysator E hergestellt mit der Ausnahme, daß Borsäure der ersten Herstellungsstufe in einer Menge zugesetzt wurde, daß der fertige Katalysator einen Borgehalt (bezogen auf Al₂O₃) von 17 Gew.%, gerechnet als B₂O₃, aufwies.

### Beispiel 4

Die in Beispiel 3 beschriebenen Katalysatoren E und F wurden auf Schwefelwasserstoffemission entsprechend der Verfahrensweise von Beispiel 2 geprüft: Die Schwefelwasserstoffemission für Katalysator E betrug 202 mg/m³; während diejenige von Katalysator F nur 80 mg/m³ ausmachte.

### Beispiel 5

Nach der in Beispiel 1 beschriebenen Verfahrensweise wurden 5 weitere Dreiweg-Katalysatoren in Pelletform (Katalysator G, H, I, J, K) hergestellt. Der gesamte Edelmetallgehalt betrug 0.1736 Gew.%, bezogen auf die Aluminiumoxidmenge. Das Gewichtsverhältnis zwischen den Edelmetallen betrug Pt : Pd : Rh = 8 : 3.2 : 1 für alle Katalysatoren. Die Katalysatoren enthielten 7.6 Gew.% CeO₂ und 0.6 Gew.% ZrO₂, jeweils bezogen auf die Aluminiumoxidmenge.

Katalysator G wurde ohne weitere Zusätze hergestellt.

Katalysator H wurde wie Katalysator G hergestellt, mit der Ausnahme, daß in dem ersten Herstellungsschritt Borsäure zur Cer- und Zirkonacetatlösung zugefügt wurde. Die Menge zugegebener Borsäure war so bemessen, daß der fertige Katalysator H 3.4 Gew.% B₂O₃ enthielt, bezogen auf die Aluminiumoxidmenge.

Auch Katalysator I wurde wie Katalysator G hergestellt, mit der Ausnahme, daß Borsäure der Lösung der Edelmetallsalze, die in dem zweiten Herstellungsschritt benutzt wurde, zugefügt wurde. Die Menge zugegebener Borsäure war so bemessen, daß der fertige Katalysator I 0.7 Gew.% B₂O₃ enthielt.

Katalysator J wurde hergestellt, indem Katalysator G nachträglich mit einer wäßrigen Borsäurelösung so imprägniert wurde, daß der fertige Katalysator J 1.36 Gew.% B₂O₃ enthielt, bezogen auf die Aluminiumoxidmenge.

Katalysator K wurde wie Katalysator H hergestellt, mit der Ausnahme, daß statt Borsäure eine wäßrige Suspension von Borphosphat (BPO₄) benutzt wurde. Der Katalysator K enthielt 0.68 Gew.% B₂O₃ und 1.37 Gew.% P₂O₅, bezogen auf die Aluminiumoxidmenge.

Die Schwefelwasserstoffemissionen der Katalysatoren G, H, I, J und K wurden nach Beispiel 2 gemessen und betrugen 100 mg/m³ für Katalysator G, 40 mg/m³ für Katalysator H, 31 mg/m³ für Katalysator I, 44 mg/m³ für Katalysator J und 6 mg/m³ für Katalysator K.

Hieraus folgt, daß unabhängig von der Einbringungsweise des Bors, d. h. unabhängig davon, ob eine in Wasser lösliche Borverbindung (wie Borsäure) oder eine wäßrige Suspension einer unlöslichen Borverbindung (wie Borphosphat) benutzt wird oder ob das Bor in einem separaten Herstellungsschritt oder auch gemeinsam mit den Unedelmetallpromotoren oder mit den Edelmetallen eingebracht wird, immer ein günstiger Einfluß auf die Verringerung der H₂S-Emission im Vergleich zu den entsprechenden Bor-freien Katalysatoren erzielt werden kann.

### Beispiel 6

Um sicherzustellen, daß der Zusatz von Borsäure nicht zu einer Verschlechterung der Katalysatoraktivität führt, wurden die in Beispiel 5 beschriebenen Katalysatoren G und H an einem Motor-Dynamometer auf Dreiweg-Wirksamkeit ausgewertet. Die Ergebnisse sind in Figur II gezeigt. Diese Figur zeigt klar, daß der Zusatz von Borsäure die Katalysatorwirkung in keiner Weise verschlechtert.

### Beispiel 7

Um sicherzustellen, daß die Addition von Borsäure nicht zu einer beschleunigten Alterung des Katalysators führt, wurden die in Beispiel 5 beschriebenen Katalysatoren G und H 100 Stunden bei 850° C und λ = 0,995 an einem Motor-Dynamometer gealtert. Dann wurde die Dreiweg-Wirksamkeit der gealterten Katalysatoren ausgewertet. Die Ergebnisse sind in Figur III gezeigt. Diese Figur zeigt klar, daß die Zugabe von Borsäure nicht zu einer beschleunigten Alterung des Katalysators führt.

### Beisiel 8

Um zu beweisen, daß die Zugabe von Bor zu einer Verringerung der Speicherung von Schwefeloxiden führt, wurde bestimmt, wieviel SO₂ bei 60° C durch die Katalysatoren G und H aus Beispiel 5 gespeichert wird. 1 g Katalysator G nimmt z. B. 17.8 ml SO₂ auf, 1 g Katalysator H nimmt nur 10.8 ml SO₂ mehr auf, was deutlich macht, daß die Mitverwendung von Bor in Dreiweg-Katalysatoren zu einer Verringerung der SO₂-Speicherung und deshalb zu einer Verringerung der H₂S-Emissionen führt.

## Patentansprüche

1. Katalysator für die Reinigung der Abgase von Brennkraftmaschinen enthaltend eine Metalloxidmischung aus Aluminiumoxid der Übergangsreihe, 2 bis 70 Gew.-% Ceroxid und 0 bis 20 Gew.-% Zirkonoxid jeweils bezogen auf Aluminiumoxid und einer auf diese Metalloxidmischung aufgebrachten aktiven Phase aus wenigstens einem der bei den Platingruppenmetalle Platin und Palladium sowie mit oder ohne dem Platingruppenmetall Rhodium, wobei bei Vorhandensein von Rhodium ein Gewichtsverhältnis von 2 : 1 bis 30 : 1 zwischen Platin und/oder Palladium einerseits und Rhodium andererseits einzuhalten ist,
**dadurch gekennzeichnet,**
daß der Katalysator 0,2 bis 25 Gew.-% B₂O₃, bezogen auf Aluminiumoxid, enthält.

2. Katalysator nach Anspruch 1,
**dadurch gekennzeichnet,**
daß die Metalloxidmischung zusätzlich noch 0,5 bis 20 Gew.-% Fe₂O₃, BaO, CaO, La₂O₃ und/oder andere Seltene Erdmetalloxide enthält.

3. Katalysator nach Anspruch 1 oder 2,
**dadurch gekennzeichnet,**
daß er in Pelletform vorliegt.

4. Katalysator nach Anspruch 1 oder 2,
**dadurch gekennzeichnet,**
daß er in Form eines Überzugs auf einem wabenförmigen inerten Träger aus Keramik oder Metall oder auf einem Schaumkeramikträger in einer Menge von 5 bis 30 Gew.-%, bezogen auf das Gewicht des Trägers, vorliegt.

5. Verfahren zur Herstellung des Katalysators nach einem der Ansprüche 1 bis 4,
**dadurch gekennzeichnet,**
daß die Metalloxidmischung durch Imprägnieren des Aluminiumoxids mit einer wäßrigen Lösung von Salzen des Cers und gegebenenfalls Zirkons oder durch Vermischen des Aluminiumoxids mit einer wäßrigen Suspension von deren Oxiden, Hydroxiden oder Carbonaten und nachfolgendem Trocknen und Tempern an Luft bei 500 bis 900° C erhalten wird, daß anschließend die aktive Phase auf die Metalloxidmischung durch Imprägnieren mit einer wäßrigen Lösung von Salzen der gemäß Anspruch 1 anzuwendenden Platingruppenmetalle aufgebracht wird und daß der Gehalt an B₂O₃ durch Imprägnieren der Metalloxidmischung mit einer gelösten oder dispergierten borhaltigen Verbindung eingebracht und der Katalysator abschließend getrocknet und thermisch aktiviert wird.

6. Verfahren nach Anspruch 5,
**dadurch gekennzeichnet,**
daß das Imprägnieren der Metalloxidmischung mit B₂O₃ vor dem Aufbringen der aktiven Phase erfolgt und der Katalysator abschließend bei Temperaturen von 150 bis 900° C thermisch aktiviert wird.

7. Verfahren nach Anspruch 5,
**dadurch gekennzeichnet,**
daß das Imprägnieren der Metalloxidmischung mit B₂O₃ zusammen mit oder nach dem Aufbringen der aktiven Phase erfolgt und der Katalysator abschließend bei Temperaturen von 150 bis 650° C thermisch aktiviert wird.

8. Verfahren nach Anspruch 6 oder 7,
**dadurch gekennzeichnet,**
daß der Katalysator in einem Wasserstoff enthaltenden Gasstrom thermisch aktiviert wird.

9. Verfahren nach Anspruch 6 oder 7,
**dadurch gekennzeichnet,**
daß der Katalysator unter hydrothermalen Bedingungen thermisch aktiviert wird.

10. Verfahren nach einem der Ansprüche 5 bis 9,
**dadurch gekennzeichnet,**
daß als Aluminiumoxid ein gitter-stabilisiertes Aluminiumoxid verwendet wird.

11. Verwendung des Katalysators nach einem der Ansprüche 1 bis 4 zur Reinigung der Abgase von Verbrennungskraftmaschinen unter Verminderung der Speicherung von Schwefeloxiden und der Emission von Schwefelwasserstoff.

## Claims

1. Catalyst for the purification of the exhaust gases of internal combustion engines, containing a metal oxide mixture comprising aluminium oxide of the transition series, 2 to 70% by weight of cerium oxide and 0 to 20% by weight of zirconium oxide, in each case relative to aluminium oxide, and an active phase applied onto this metal oxide mixture and comprising at least one of the two platinum group metals platinum and palladium, and with or without the platinum group metal rhodium, where, if rhodium is present, a weight ratio of 2:1 to 30:1 is to be kept between platinum and/or palladium on the one hand and rhodium on the other hand, characterized in that the catalyst contains 0.2 to 25% by weight of B₂O₃, relative to aluminium oxide.

2. Catalyst according to Claim 1, characterized in that the metal oxide mixture additionally contains 0.5 to 20% by weight of Fe₂O₃, BaO, CaO, La₂O₃ and/or other rare earth metal oxides.

3. Catalyst according to Claim 1 or 2, characterized in that it is in pellet form.

4. Catalyst according to Claim 1 or 2, characterized in that it is in the form of a coating on a honeycombed inert carries of ceramic or metal, or on a foam ceramic carrier in a quantity of 5 to 30% by weight, relative to the weight of the carrier.

5. Process for the preparation of the catalyst according to one of Claims 1 to 4, characterized in that the metal oxide mixture is obtained by impregnating the aluminium oxide with an aqueous solution of salts of cerium and optionally of zirconium, or by mixing the aluminium oxide with an aqueous suspension of oxides, hydroxides or carbonates thereof, and subsequent drying and tempering in air at 500 to 900°C, in that subsequently the active phase is applied onto the metal oxide mixture by impregnating with an aqueous solution of salts of the platinum group metals to be used in accordance with Claim 1, and in that the content of B₂O₃ is introduced by impregnating the metal oxide mixture with a dissolved or dispersed boron-containing compound, and the catalyst is finally dried and activated by heat.

6. Process according to Claim 5, characterized in that impregnation of the metal oxide mixture with B₂O₃ takes place before the active phase is applied, and the catalyst is finally activated by heat at temperatures from 150 to 900°C.

7. Process according to Claim 5, characterized in that the impregnation of the metal oxide mixture of B₂O₃ takes place together with or after the application of the active phase, and the catalyst is finally activated by heat at temperatures from 150 to 650°C.

8. Process according to Claim 6 or 7, characterized in that the catalyst is activated by heat in a gas stream containing hydrogen.

9. Process according to Claim 6 or 7, characterized in that the catalyst is activated by heat under hydrothermal conditions.

10. Process according to one of Claims 5 to 9, characterized in that there is used as the aluminium oxide a lattice-stabilized aluminium oxide.

11. Use of the catalyst according to one of Claims 1 to 4 for the purification of the exhaust gases of internal combustion engines while reducing the storage of sulphur oxides and the emission of hydrogen sulphide.

## Revendications

1. Catalyseur destiné à la purification des gaz d'échappement de moteurs à combustion interne, contenant un mélange d'oxydes métalliques formé d'oxyde d'aluminium de la série de transition, de 2 à 70 % en poids d'oxyde de cérium et de 0 à 20 % en poids d'oxyde de zirconium, rapportés respectivement à l'oxyde d'aluminium et d'une phase active introduite sur ce mélange d'oxydes métalliques comportant au moins un des deux métaux du groupe platine, platine et palladium ainsi qu'avec ou sans le métal du groupe platine rhodium, un rapport de poids étant à observer dans le cas de la présence de rhodium de 2 : 1 jusqu'à 30 : 1 entre platine et/ou palladium d'une part et rhodium d'autre part,
caractérisé :
- en ce que le catalyseur contient 0,2 à 25 % en poids de B₂O₃, rapporté à l'oxyde d'aluminium.

2. Catalyseur selon la revendication 1, caractérise :
- en ce que le mélange d'oxydes métalliques contient additionnellement de 0,5 à 20 % en poids de Fe₂O₃, BaO, CaO, La₂O₃ et/ou d'autres oxydes métalliques de terres rares.

3. Catalyseur selon les revendications 1 ou 2, caractérisé :
- en ce qu'il se présente sous forme de boulettes.

4. Catalyseur selon les revendications 1 ou 2, caractérisé en ce qu'il se présente sous forme d'une couche sur un support inerte alvéolaire en céramique ou métal ou sur un support en céramique mousse, en une quantité de 5 à 30 % en poids, rapportée au poids du support.

5. Procédé pour la préparation du catalyseur selon l'une des revendications 1 à 4, caractérisé:
- en ce que le mélange d'oxydes métalliques est obtenu par imprégnation de l'oxyde d'aluminium avec une solution aqueuse de sels de cérium et éventuellement de zirconium ou par mélange de l'oxyde d'aluminium avec une suspension aqueuse de leurs oxydes, hydroxydes ou carbonates et séchage successif et recuisson à l'air entre 500 et 900°C,
- en ce qu'ensuite la phase active est introduite sur le mélange d'oxydes métalliques par imprégnation avec une solution aqueuse de sels des métaux du groupe platine à utiliser selon la revendication 1 et,
- en ce que la teneur en B₂O₃ est amenée par imprégnation du mélange d'oxydes métalliques avec un composé contenant du bore, dissous ou en dispersion et le catalyseur est séché finalement et est activé thermiquement.

6. Procédé selon la revendication 5, caractérisé :
- en ce que l'imprégnation du mélange d'oxydes métalliques avec B₂O₃ se fait avant l'introduction de la phase active et le catalyseur finalement est activé thermiquement à des températures entre 150 et 900°C.

7. Procédé selon la revendication 5, caractérisé :
- en ce que l'imprégnation du mélange d'oxydes métalliques avec B₂O₃ se fait en même temps ou après l'introduction de la phase active et le catalyseur est finalement activé thermiquement à des températures de 150 à 650°C.

8. Procédé selon les revendications 6 ou 7, caractérisé :
- en ce que le catalyseur est activé thermiquement dans un courant gazeux contenant de l'hydrogène.

9. Procédé selon les revendications 6 ou 7, caractérisé :
- en ce que le catalyseur est activé thermiquement dans des conditions hydrothermales.

10. Procédé selon l'une des revendications 5 à 9, caractérisé :
- en ce qu on utilise comme oxyde d'aluminium un oxyde d'aluminium stabilisé en réseau.

11. Utilisation du catalyseur selon l'une des revendications 1 à 4 pour la purification des gaz d'échappement de moteurs à combustion interne avec réduction de l'accumulation d'oxydes du soufre et de l'émission d'hydrogène sulfuré.
